# EUROPÄISCHE PATENTSCHRIFT

(11) **EP 3 826 858 B1**
(45) Veröffentlichungstag und Bekanntmachung des Hinweises auf die Patenterteilung: **21.08.2024**
(21) Anmeldenummer: 19745048.9
(22) Anmeldetag: 08.07.2019
(51) Int. Cl.: B43L 19/00, C08K 5/103

(54) **RADIERER**
ERASER
GOMME

(30) Priorität: 25.07.2018 DE 102018005822
(43) Veröffentlichungstag der Anmeldung: 02.06.2021
(73) Patentinhaber: STAEDTLER SE, 90427 Nürnberg (DE)
(72) Erfinder: MADERER, Tanja, 90530 Wendelstein (DE)
(86) Internationale Anmeldenummer: PCT/EP2019/025219
(87) Internationale Veröffentlichungsnummer: WO 2020/020485

(56) Entgegenhaltungen:
- WO-A1-2016/043639
- WO-A1-2018/010835

## Beschreibung

Die Erfindung betrifft einen Radierer zum Entfernen von Abstrichen von Schreib-, Mal- und/ oder Zeichengeräten aufweisend mindestens ein Bindemittel und mindestens zwei Weichmacher.

Derartige Radierer zum Entfernen von Abstrichen von Schreib-, Mal- und/oder Zeichengeräten sind prinzipiell aus dem Stand der Technik bekannt.

Beispielsweise sind Weich-PVC-Systeme für Radiergummis seit den 1960er Jahren als bekannt anzusehen. Sie bestehen in der Regel aus Polyvinylchlorid (PVC) als Grundpolymer/Bindemittel, das mit Füllstoff gestreckt wird und einem Weichmacher zur Plastifizierung des Bindemittels. Darüber hinaus können noch weitere Bestandteile wie Additive, beispielsweise Farbmittel, Lösungsmittel zur Erreichung spezieller Radiereigenschaften, usw. hinzugefügt werden. Bei derartigen Radierern wurde die Weichmacherkomponente über die Jahre hin immer wieder aufgrund physiologischer Anforderungen ausgetauscht.

Die Herstellung von PVC-Radierern erfolgt in der Regel über eine Verpastung der Komponenten mit angeschlossener Gelierung und Formgebung im Extruder mittels Wärmezufuhr.

Allgemein kann festgehalten werden, dass die eingesetzten Weichmacher physiologisch als unbedenklich eingestuft sein sollten, aber auch nach den technischen Eigenschaften, um gute Extrudierbarkeit, leichte und gute Verpastungsfähigkeit, befriedigende Radiereigenschaften und erforderliche Weichheit ausgewählt sein sollten.

Als Beispiel von physiologisch als unbedenklich eingestuften Weichmachern sei Acetyltributylcitrat (ATBC) genannt. Jedoch hat sich beim Einsatz von ATBC herausgestellt, dass die Migration derartiger Weichmacher als zu hoch einzustufen ist.

Die DE 10 2016 008 559 A1 beschreibt Radierer mit unterschiedlichen Bindemitteln und einem kostengünstigen Polyolester als Weichmacher. Als nachteilig hat sich hierbei herausgestellt, dass viele der Weichmacher aus der Gruppe der Polyolester eine relativ große Migrationsneigung an den Tag legen.

Weiter ist aus der WO 2016043639 A1 eine sehr stabile weichgemachte Polyvinylhalogenidzusammensetzung bekannt. Die Polyvinylhalogenidzusammensetzung beinhaltet Polyvinylchlorid, Polyvinylidenchlorid und Polyvinylidenfluorid, Als Weichmacher wird unter anderem Pentaerythritoltetravalerat eingesetzt. Eine Verwendung derartiger Zusammensetzungen für Radierer ist in dieser Schrift nicht dokumentiert.

Aufgabe der Erfindung ist es daher einen Radierer zu schaffen, der zum einen kostengünstig hergestellt werden kann und zum anderen eine akzeptable Migrationsneigung des Weichmachers aufweist.

Weiter ist es Aufgabe der vorliegenden Erfindung, dass die technischen Eigenschaften, gute Extrudierbarkeit, leichte und gute Verpastungsfähigkeit, befriedigende Radiereigenschaften und erforderliche Weichheit sichergestellt sind.

Diese Aufgabe wird für einen Radierer zum Entfernen von Abstrichen von Schreib-, Mal- und/oder Zeichengeräten, der mindestens ein Bindemittel und mindestens zwei Weichmacher umfasst, dadurch gelöst, dass der Radierer mindestens Weichmacher in Form von Pentaerythritoltetravalerat und Weichmcher in Form von Sojabohnenöl (ESBO) aufweist.

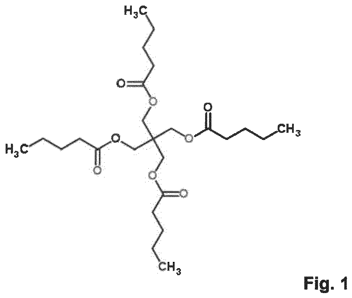

Die chemische Strukturformel des Pentaerythritoltetravalerat (PETV) ist in Figur 1 dargestellt.

Der Radierer weist den Vorteil auf, dass das Migrationsverhalten des Weichmachers in einem akzeptablen Bereich bleibt, was derzeit der verzweigten Form der Moleküle des PETV (siehe Figur 1) zugeschrieben wird, die Radiererkosten jedoch aufgrund dessen günstigen Preises deutlich sinken.

Ein geeigneter Migrationstest erfolgt dergestalt, dass ein Teil eines Test-Radierers in Kontakt mit einem möglichen Reaktionspartner gebracht und gegen den Reaktionspartner gedrückt wird. Als mögliche Reaktionspartner dienen unter anderem Polystyrol, Polyethylen, Polypropylen und Bleistiftlacke. Gleichzeitig wird eine Vergleichsprobe erstellt, bei der ein Teil eines handelsüblichen Radierers mit einem Weichmacher in Form von Alkansulfonsäurephenylester ebenfalls in Kontakt mit einem gleichartigen Reaktionspartner gebracht und gegen den Reaktionspartner gedrückt wird.

Die Testanordnungen werden auf ca. 50°C erwärmt und nach unterschiedlichen Testzeiträumen die Kontaktflächen des Teils des Test-Radierers mit dem Reaktionspartner visuell auf Veränderungen begutachtet und mit den Kontaktflächen des handelsüblichen Radierers verglichen. Zeigt sich, dass die Veränderung der Kontaktfläche des Test-Radierers in etwa vergleichbar ist zu Veränderungen an den Kontaktflächen des handelsüblichen Radierers, ist der Test bestanden.

Ausführungsformen und vorteilhafte Weiterbildungen des Radierers sind nachfolgend erläutert.

Durch ein Verschneiden des PETV mit mindestens einem weiteren Weichmacher kann das Migrationsverhalten signifikant verringert werden. Der Radierer weist neben dem Pentaerythritoltetravalerat mindestens einen weiteren Weichmacher auf, wobei sich in Summe 20 bis 60 Gew.-% an Weichmachern im Radierer ergeben. Der Radierer weist das Pentaerythritoltetravalerat in einer Menge von 10 bis 30 Gew.-% auf und Sojabohnenöl in einer Menge von 10 bis 30 Gew.-% auf.

Der mindestens eine weitere Weichmacher ist durch mindestens ein epoxidiertes Pflanzenöl gebildet. Als epoxidiertes Pflanzenöl hat sich hier die Verwendung von epoxidiertem Sojabohnenöl (ESBO) bewährt Die Kombination des PETV mit ESBO hat sich geeignet erwiesen eine Migration des Weichmachers an eine Oberfläche des Radierers zu verringern.

Der Radierer weist weiterhin bevorzugt mindestens ein Bindemittel auf aus der Gruppe umfassend Polyvinylchlorid (PVC), Polyvinylacetat (PVAc), Polyolefine. Das PVC ist dabei eines der billigsten Polymere, die am Markt erhältlich sind. Weiterhin weist der Radierer vorzugsweise mindestens einen anorganischen Füllstoff auf, wie beispielsweise Kreide (Calciumcarbonat), Bimsmehl, Kaolin, Glasmehl, Ton, Talkum, usw. Dabei kann in dem Radierer lediglich ein anorganischer Füllstoff oder in Kombination können zwei oder mehrere anorganische Füllstoffe enthalten sein.

In einer bevorzugten Ausführungsform des Radierers weist dieser weiterhin mindestens ein Additiv auf, insbesondere aus der Gruppe umfassend Farbmittel, Wachse, Öle, Emulgatoren, Stabilisatoren, Lösemittel. Die Farbmittel können dabei anorganische Pigmente, wie Titanoxid, und/oder organische Pigmente umfassen.

Der Radierer enthält

| | |
|---|---|
| Bindemittel | 20 - 60 Gew.-% |
| Pentaerythritoltetravalerat | 10 - 30 Gew.-% |
| Epoxidiertes Pflanzenöl | 10 - 30 Gew.-% |
| Füllstoffe | 0 - 60 Gew.-% |
| Additive | 0 - 10 Gew.-% |

Der Radierer weist dabei Pentaerythritoltetravalerat in einer Menge von 10 bis 30 Gew.-% auf und den mindestens einen weiteren Weichmacher in Form von epoxidiertem Pflanzenöl in einer Menge von 10 bis 30 Gew.-% auf. So ist ein ausgewogenes Verhältnis zwischen geringen Kosten und ausgezeichneten Migrationseigenschaften erreicht.

Es hat sich in überraschender Weise gezeigt, dass durch die Verwendung von Pentaerythritoltetravalerat (PETV, CAS.no.: 15834-04-5**)** als erste Weichmacherkomponente, kombiniert mit epoxidierterr Sojabohnenöl (ESBO) als zweite Weichmacherkomponente, die Aufgabe mit signifikant guten Ergebnissen gelöst wird.

Epoxidiertes Sojabohnenöl ist ein hochmolekularer Weichmacher, durch welchen die bestehende Migrationsneigung des Pentaerythritoltetravalerat noch deutlich verringert wird.

Zudem hat es sich in überraschender Weise gezeigt, dass die Radiereigenschaften und damit erzielte Radierergebnisse der erfindungsgemäßen Radierer vergleichbar sind mit denen von Radierern mit wesentlich teureren Weichmachern.

Ein wichtiger Nebeneffekt ist darin zu sehen, dass sowohl die Pastenherstellung als auch die daran angeschlossene Extrusion in gewohnter Weise bei konstanter Qualität durchgeführt werden kann.

Als Maß für die Radierbarkeit bzw. Radierfähigkeit wird im Sinne der Erfindung die weitgehende Entfernung von Bleistiftabstrichen auf Medien verstanden, wobei die Resteinfärbung des Mediums ein Maß für die Radierleistung darstellt.

Mit nachfolgendem Rahmenbeispiel werden bevorzugte Zusammensetzungen des erfindungsgemäßen Radierers näher erläutert.

### Rahmenbeispiel

| | |
|---|---|
| Bindemittel | 20 - 60 Gew.-% |
| Pentaerythritoltetravalerat | 10 - 30 Gew.-% |
| Epoxidiertes Pflanzenöl | 10 - 30 Gew.-% |
| Füllstoffe | 0 - 60 Gew.-% |
| Additive | 0 - 10 Gew.-% |

Mit mindestens einem der oben aufgeführten Bindemitteln in Kombination mit den Weichmachern Pentaerythritoltetravalerat und epoxidiertem Sojabohnenöl, kann ein besonders günstiges Weichmacher- Migrationsverhalten erreicht werden. Das bevorzugt eingesetzte Bindemittel ist PVC, da mit diesem Bindemittel die besten Ergebnisse erzielt werden, um die gestellte Aufgabe zu lösen, insbesondere hinsichtlich der Radierfähigkeit und des Migrationsverhaltens des Weichmachers. Außerdem können dadurch die Herstellungskosten des Radierers minimiert werden. Der erfindungsgemäße Radierer soll nachfolgend durch folgende Rezepturbeispiele näher dargestellt werden.

### Rezepturbeispiel 1

| | |
|---|---|
| PVC | 30,0 Gew.-% |
| Pentaerythritoltetravalerat | 20,0 Gew.-% |
| Epoxidiertes Sojabohnenöl | 10,0 Gew.-% |
| Titandioxid | 2,0 Gew.-% |
| Talkum | 5,0 Gew.-% |
| Kreide | Rest |

### Rezepturbeispiel 2

| | |
|---|---|
| PVC | 25,0 Gew.-% |
| PVAc | 5,0 Gew.-% |
| Pentaerythritoltetravalerat | 20,0 Gew.-% |
| Epoxidiertes Sojabohnenöl | 18,0 Gew.-% |
| Ruß | 0,5 Gew.-% |
| Kreide | Rest |

Hergestellt kann ein derartiger Radierer beispielsweise in folgender Weise werden.

### Herstellungsbeispiel

In einem Rührer werden PVC-Pulver, der Weichmacher und ggf. eingesetzte Füllstoffe und Additive zu einem homogenen Plastisol vermischt.

Das dabei erhaltene Plastisol wird mittels Doppelschneckenextruder geliert und über eine Düse zu einem endlosen Strang geformt.

Nach Durchlaufen des Strangs durch ein Kühlbad wird der Radiererstrang auf die gewünschte Länge zu einzelnen Radierern geschnitten und ggf. bedruckt und verpackt.

Bei der Herstellung der Radierer hat sich zudem gezeigt, dass die Härte des Radierers durch Variation des Weichmacheranteiles und Weichmacherverhältnisses leicht und genau anpass- bzw. einstellbar ist.

## Patentansprüche

1. Radierer zum Entfernen von Abstrichen von Schreib-, Mal- und/ oder Zeichengeräten aufweisend mindestens ein Bindemittel und mindestens einen Weichmacher,
**dadurch gekennzeichnet,**
**dass** der Radierer Pentaerythritoltetravalerat als erste Weichmacherkomponente aufweist,
**dass** der Radierer epoxidiertes Sojabohnenöl (ESBO) als zweite Weichmacherkomponente aufweist
**und dass** sich der Radierer aus
| | |
|---|---|
| Bindemittel | 20 - 60 Gew.-% |
| Pentaerythritoltetravalerat | 10 - 30 Gew.-% |
| Epoxidiertes Pflanzenöl | 10 - 30 Gew.-% |
| Füllstoffe | 0 - 60 Gew.-% |
| Additive | 0 - 10 Gew.-% |
zusammensetzt.

2. Radierer nach einem der Anspruch 1,
**dadurch gekennzeichnet,**
**dass** der Radierer mindestens ein Bindemittel aus der Gruppe umfassend Polyvinylchlorid (PVC), Polyvinylacetat (PVAc), Polyolefine, aufweist.

3. Radierer nach einem der Anspruch 1,
**dadurch gekennzeichnet,**
**dass** der Radierer weiterhin mindestens einen anorganischen Füllstoff, wie Kreide (Calciumcarbonat), Bimsmehl, Kaolin, Glasmehl, Ton, Talkum, aufweist.

4. Radierer nach einem der Anspruch 1,
**dadurch gekennzeichnet,**
**dass** der Radierer weiterhin mindestens ein Additiv aus der Gruppe umfassend Farbmittel, Wachse, Öle, Emulgatoren, Stabilisatoren, Lösemittel, aufweist.

## Claims

1. Eraser for removing marks by writing, painting and/or drawing tools, comprising at least one binder and at least one softener,
**characterised in that**
the eraser comprises pentaerythritoltetra valerate as first softener component,
the eraser comprise epoxidised soya bean (ESBO) as second softener component
and the eraser is composed of
| | |
|---|---|
| binder | 20 - 60 weight % |
| pentaerythritoltetra valerate | 10 - 30 weight % |
| epoxidised plant oil | 10 - 30 weight % |
| fillers | 0 - 60 weight % |
| additives | 0 - 10 weight % |

2. Eraser according to claim 1,
**characterised in that**
the eraser comprises at least one binder from the group comprising polyvinylchloride (PVC), polyvinylacetate (PVAc) and polyolefins.

3. Eraser according to claim 1,
**characterised in that**
the eraser comprises at least one inorganic filler such as chalk (calcium carbonate), pumice powder, kaolin, glass powder, clay or talcum.

4. Eraser according to claim 1,
**characterised in that**
the eraser comprises at least one additive from the group comprising colorants, waxes, oils, emulsifiers, stabilisers and solvents.

## Revendications

1. Gomme à effacer conçue pour éliminer des traces d'instruments d'écriture, de peinture et/ou de dessin, comprenant au moins un liant et au moins un agent plastifiant,
**caractérisée par le fait**
**que** ladite gomme comporte du tétravalérate de pentaérythritol en tant que premier composant de l'agent plastifiant ;
**que** ladite gomme comporte de l'huile de soja époxydée (ESBO) en tant que second composant dudit agent plastifiant ;
et **que** ladite gomme se compose de
20-60 % en poids de liant
10-30 % en poids de tétravalérate de pentaérythritol
10-30 % en poids d'huile végétale époxydée
0-60 % en poids de substances de charge
0-10 % en poids d'additifs.

2. Gomme à effacer selon la revendication 1,
**caractérisée par le fait**
**que** ladite gomme comporte au moins un liant du groupe incluant du chlorure de polyvinyle (PVC), de l'acétate de polyvinyle (PVAc), des polyoléfines.

3. Gomme à effacer selon la revendication 1,
**caractérisée par le fait**
**que** ladite gomme comporte, en outre, au moins une substance de charge minérale telle que de la craie (carbonate de calcium), de la poudre de pierre ponce, du kaolin, de la poudre de verre, de l'argile, du talc.

4. Gomme à effacer selon la revendication 1,
**caractérisée par le fait**
**que** ladite gomme comporte, par ailleurs, au moins un additif du groupe incluant des colorants, des cires, des huiles, des émulsifiants, des stabilisateurs, des solvants.
